(19) Europäisches Patentamt
European Patent Office
Office européen des brevets

(11) **EP 1 062 751 B1**

(12) **EUROPÄISCHE PATENTSCHRIFT**

(45) Veröffentlichungstag und Bekanntmachung des Hinweises auf die Patenterteilung:
**30.01.2002 Patentblatt 2002/05**

(21) Anmeldenummer: **99919104.2**

(22) Anmeldetag: **19.03.1999**

(51) Int Cl.$^7$: **H04B 10/08**

(86) Internationale Anmeldenummer:
**PCT/DE99/00800**

(87) Internationale Veröffentlichungsnummer:
**WO 99/48232 (23.09.1999 Gazette 1999/38)**

(54) **VERFAHREN ZUR ÜBERWACHUNG DER SIGNALQUALITÄT IN TRANSPARENTEN OPTISCHEN NETZEN**

METHOD FOR MONITORING THE SIGNAL QUALITY IN TRANSPARENT OPTICAL NETWORKS

PROCEDE POUR LE CONTROLE DE LA QUALITE DES SIGNAUX DANS DES RESEAUX OPTIQUES TRANSPARENTS

(84) Benannte Vertragsstaaten:
**DE FR GB IT**

(30) Priorität: **19.03.1998 DE 19812078**

(43) Veröffentlichungstag der Anmeldung:
**27.12.2000 Patentblatt 2000/52**

(73) Patentinhaber: **SIEMENS AKTIENGESELLSCHAFT**
**80333 München (DE)**

(72) Erfinder: **BISCHOFF, Mathias**
**D-81375 München (DE)**

(56) Entgegenhaltungen:
**DE-A- 19 504 896        US-A- 5 585 954**

- **BERGANO N S ET AL: "MARGIN MEASUREMENTS IN OPTICAL AMPLIFIER SYSTEMS" IEEE PHOTONICS TECHNOLOGY LETTERS, Bd. 5, Nr. 3, 1. März 1993 (1993-03-01), Seiten 304-306, XP000616830 ISSN: 1041-1135**

**Beschreibung**

Der Anmeldungsgegenstand betrifft ein Verfahren zur Überwachung der Signalqualität in transparenten optischen Übertragungsstrecken mit den Merkmalen des Oberbegriffs des Anspruchs 1.

Ein derartiges Verfahren ist aus der DE 195 04 896 bekannt.

Optische Netze auf der Basis hochbitratiger, fasergebundener Übertragungsstrecken mit optischen Umschaltern und gegebenenfalls auch mit optischem Frequenzmultiplex stellen das zukünftige Transportnetz der Telekommunikation dar. Bereits bestehende Netze werden sich auf diesem, vorerst als Overlay zu installierenden Netz abstützen.

Die zu erwartende Weiterentwicklung der Kommunikationsnetze macht es erforderlich, die optischen Netze möglichst transparent für ihre Benutzer zu gestalten. Dabei sind verschiedene Grade der Transparenz möglich. So ist zu unterscheiden, ob ein Netz hinsichtlich der Modulationsart, des Leitungscodes, der Taktfrequenz und/oder des Übertragungsformats - also beispielsweise der Wahl zwischen der plesiochronen oder der synchronen digitalen Hierarchie - transparent ist. Von praktischer Bedeutung sind dabei eine Reihe von Kombinationen, wobei ein Netz maximaler Transparenz hinsichtlich Modulationsart, Leitungscode, Taktfrequenz und Übertragungsformat transparent ist, bei weniger hoher Transparenz ist die Modulationsart festgelegt, bei weiter abgesunkener Transparenz ist auch die Freiheit bezüglich des Leitungscodes entfallen und bei geringer Transparenz besteht nur Freiheit hinsichtlich des Übertragungsformats.

Das Management von Netzen macht es notwendig, die Übertragungsqualität zu überwachen. Diese Funktion wird bei Netzen der synchronen digitalen Hierarchie oder bei Netzen für ATM-Übertragung durch Bilden einer sogenannten Bit Interleaved parity (BIP), also der Bitparität, über einen Block der Nutzdaten realisiert. Das Ergebnis der Paritätsberechnung wird dabei zusätzlich zu den Nutzdaten vom Senderknoten zum Empfängerknoten übermittelt, wo durch einen Vergleich der neuberechneten Parität mit dem empfangenen Wert eine Beurteilung der Übertragungsqualität bzw. die Erkennung von Übertragungsfehlern möglich ist. Dieses Verfahren setzt aber voraus, daß in jedem Netzknoten ein direkter Zugriff auf die Nutzdaten möglich ist, was den Wünschen der Benutzer nach möglichst hoher Transparenz der Übertragungswege entgegensteht.

Neben der Überwachung der Übertragungsqualität durch Untersuchung der Bitparität ist es auch bekannt, jeweils wenigstens einen Kanal eines optischen Frequenzmultiplexsignals für Überwachungszwecke zu reservieren. Über diesen Kanal laufen dann die für das Netzmanagement erforderlichen Informationsflüsse, wobei die Parameter dieses Kanals mit Sicherheit bekannt sind und in der Regel ausreichend Übertragungskapazität für Testsequenzen zur Verfügung steht. Auf diese Weise gelangt man zwar an zuverlässige Informationen über die Übertragungsqualität von Netzen hoher Transparenz, setzt aber dabei voraus, daß der Überwachungskanal für alle anderen Übertragungskanäle repräsentativ ist. Die Hypothese, daß alle Kanäle in einem optischen Frequenzmultiplexsystem von einer Störung gleichermaßen betroffen sind, ist jedoch in vielen Fällen nicht gegeben. Gerade in optischen Netzen gibt es eine Reihe kanalselektiver Störquellen, wie Kanalnebensprechen, Welligkeit von optischen Verstärkern, Konversion von Phasenrauschen in Amplitudenrauschen an Filterflanken und auch weitere Störmöglichkeiten, so daß die Auswertung eines in einem einzelnen Kanal übermittelten Überwachungssignals keine zuverlässigen Angaben über die Übertragungsqualität des optischen Netzes liefern muß. Eine weitere Einschränkung in der Aussagekraft dieses Verfahrens ergibt sich aus dem Umstand, daß der Überwachungskanal in jeder optischen Umschaltvorrichtung, einem sogenannten Crossconnect-Schalter terminiert wird und weder Koppelnetz noch Frequenzumsetzer durchläuft, insbesondere der Frequenzumsetzer wird aber nach dem heutigen Kenntnisstand die Signalqualität entscheidend mit beeinflussen.

Bei dem in der DE 195 04 896 beschrieben Verfahren werden zum Signaltakt asynchron Amplitudenstichproben entnommen und daraus die zentralen Momente der Stichprobe berechnet. Diese werden dann mit empirisch gewonnenen Referenzwerten verglichen und daraus eine Aussage über die Signalqualität abgeleitet. Die Stichprobenauswertung mit Hilfe der Momente ist ein Verfahren, das gut geeignet ist wenn die der Stichprobe zugrunde liegende Grundgesamtheit eine unimodale Wahrscheinlichkeitsdichtefunktion aufweist. Dies ist jedoch bei dem vorliegenden Problem nicht der Fall.

In transparenten optischen Netzen besteht also die Notwendigkeit die Qualität der vom Netz transportierten Signale zu überwachen ohne auf nutzlastspezifische Overhead Information zuzugreifen, da dies die Transparenz zerstören würde.

Dem Anmeldungsgegenstand liegt das Problem zugrunde, ein Verfahren zur Überwachung der Signalqualität in transparenten optischen Übertragungsstrecken anzugeben, mit dem es einerseits möglich ist absolute Aussagen über die Signalqualität zu machen, und das außerdem eine höhere Empfindlichkeit besitzt.

Das Problem wird bei dem eingangs umrissenen Gegenstand durch die Merkmale des kennzeichnenden Teils des Anspruchs 1 gelöst.

Der Anmeldungsgegenstand macht sich die Erkenntnis zunutze, daß die Form der Funktion in den Bereichen s < a und s > b unbeachtlich einer synchronen Abtastung oder einer asynchronen Abtastung ist und bringt eine absolute Aussage über die Signalqualität sowie eine hohe Empfindlichkeit mit sich, wobei die Bimodalität der Wahrscheinlichkeitsdichtefunktion der Amplitudenabtastwerte betrücksichtigt ist.

Der Anmeldungsgegenstand wird im folgenden als Ausführungsbeispiel in einem zum Verständnis erforderlichen Umfang anhand von Figuren näher erläutert. Dabei zeigen:

Fig 1 eine Anordnung zur Durchführung des anmeldungsgemäßen Verfahrens

Fig 2 die Wahrscheinlichkeitsdichtefunktion der beiden Zustände a = logisch 0 und b= logisch 1 eines binären Signales einmal für asynchrone Abtastung mit durchgehender Linie und einmal für synchrone Abtastung mit gestrichelter Linie dargestellt,

Fig 3 ein Ablaufschema für eine anmeldungsgemäße Auswertung der Wahrscheinlichkeitsdichtefunktion für ein asynchron abgetastetes binäres Signal und

Fig 4 ein Ablaufschema für eine weitere anmeldungsgemäße Auswertung der Wahrscheinlichkeitsdichtefunktion für ein asynchron abgetastetes binäres Signal.

In den Figuren bezeichnen gleiche Bezeichnungen gleiche Elemente.

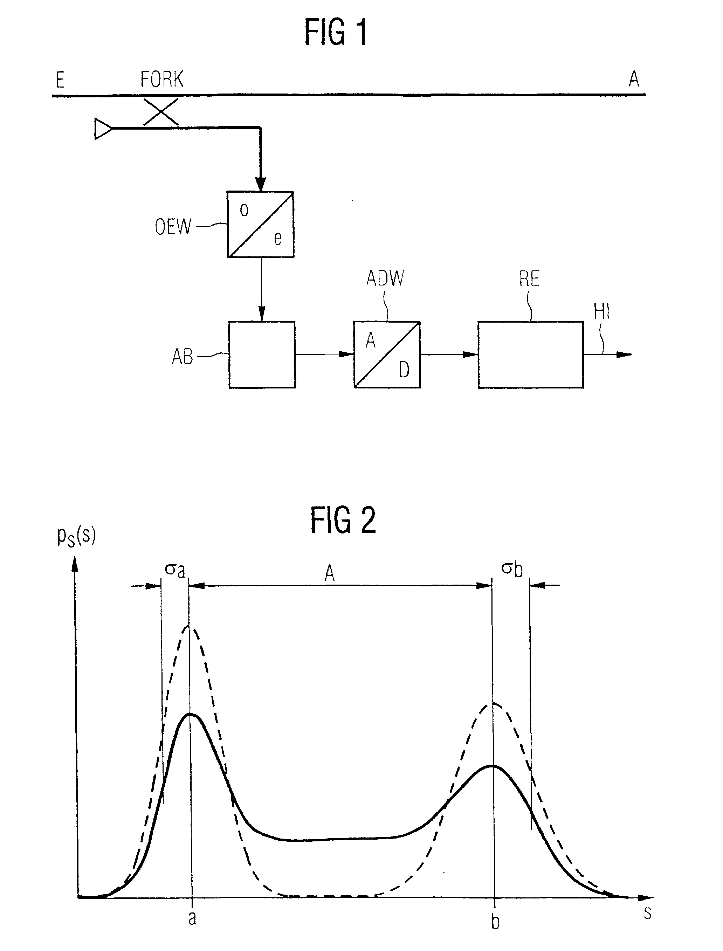

In der Figur 1 ist in den Lichtweg zwischen einem Eingang E und einem Ausgang A ein faseroptischer Richtkoppler FORK eingefügt und durch diesen ein vergleichsweise kleiner Teil der Lichtleistung ausgekoppelt und an den optischen Eingang eines optoelektronischen Wandlers OEW abgegeben. Der optoelektronische Wandler OEW, der auch einen Fotostromverstärker beinhalten kann, gibt ein entsprechendes elektrisches Ausgangssignal an einen analogen Abtaster AB ab, der nach dem "sample and hold-Prinzip" arbeitet und bei einer Signalfrequenz von 10 GHz mit einer zur Signalfrequenz asynchronen Taktfrequenz von 100 MHz arbeitet. Derartige analoge Abtaster sind beispielsweise für Samplingoszillografen handelsüblich. Mit dem Ausgang des Abtasters AB ist der Eingang eines Analog-Digital-Wandlers ADW mit einer Auflösung von 8 Bit entsprechend 256 Stufen verbunden. Der Analog-Digital-Wandler ADW arbeitet mit der gleichen Taktfrequenz wie der analoge Abtaster AB und gibt im Rhythmus von 100 MHz 8 Bit-Worte an den Eingang eines Rechners RE ab, der für die statistische Auswertung derartiger 8 Bit-Worte eingerichtet ist und einen Speicher für Referenzwerte sowie eine Ausgabeeinrichtung für die erzeugten Histogramme HI enthält. Der statistischen Auswertung liegt dabei als Voraussetzung zugrunde, daß das zu untersuchende Signal intensitätsmoduliert ist und im NRZ-Code übertragen wird. Die Voraussetzung für die statistische Unabhängigkeit der erzeugten Amplituden-Stichproben ergibt sich zum einen durch die Asynchronität zwischen der Signaltaktfrequenz und der Abtastfrequenz und zum anderen durch die vergleichsweise geringe Abtastfrequenz, durch die mit Sicherheit Stichproben aus voneinander unabhängigen Taktperioden erhalten werden.

Werden die Amplitudenstichproben si synchron zum Datentakt jeweils in Bitmitte entnommen, ergeben sich für die zugrunde liegende Grundgesamtheit eine Wahrscheinlichkeitsdichtefunktion ps(s) wie sie in Fig. 2 für binäre Signale strichliert skizziert ist. Die beiden Binärzustände werden durch die Amplitudenwerte a und b repräsentiert, um die die mit Rauschen behafteten, tatsächlichen Amplitudenwerte mit der jeweiligen Standardabweichung sa bzw. sb verteilt liegen. Aus dieser Wahrscheinlichkeitsdichte läßt sich ein allgemein üblicher Signalqualitätsparameter Q berechnen:

$$Q = \frac{A}{\sigma_a + \sigma_b} \qquad (1)$$

Dabei ist A = b - a die Signalamplitude, wobei ohne Einschränkung der Allgemeingültigkeit a < b angenommen ist. Da in einem transparenten Netz die Amplitudenstichproben nur asynchron zum Datentakt entnommen werden können, ergibt sich als Wahrscheinlichkeitsdichtefunktion ps(s) für die der Stichprobe zugrundeliegende Grundgesamtheit der in Fig. 2 durchgezogen eingezeichnete Verlauf. Da nun auch Amplituden-stichproben, die aus dem Flankenbereich der Impulse stammen, miterfasst werden, hebt sich die Dichtefunktion im Bereich a < s < b an und führt dazu, daß ps(s) nicht länger symmetrisch um a bzw. b ist. In den Bereichen s < a und s > b bleibt die Form der Funktion jedoch erhalten. Diesen Umstand nutzt das hier beschriebene Verfahren aus. Es umfaßt im einzelnen die folgenden Schritte:

(i) Entnehme dem Signal N statistisch unabhängige Amplitudenabtastwerte si.

(ii) Bestimme die Lage der lokalen Maxima a und b.

(iii) Berechne sa aus den p Abtastwerten für die gilt si ≤ a:

$$\sigma_a = \sqrt{\frac{1}{p-1}\sum_{i=1}^{p}\left(s_i - a\right)^2}$$

(iv) Berechne sb aus den q Abtastwerten für die gilt si ≥ b:

$$\sigma_b = \sqrt{\frac{1}{q-1}\sum_{i=1}^{q}\left(s_i - b\right)^2}$$

(v) Berechne Q nach (1) und gebe es aus.

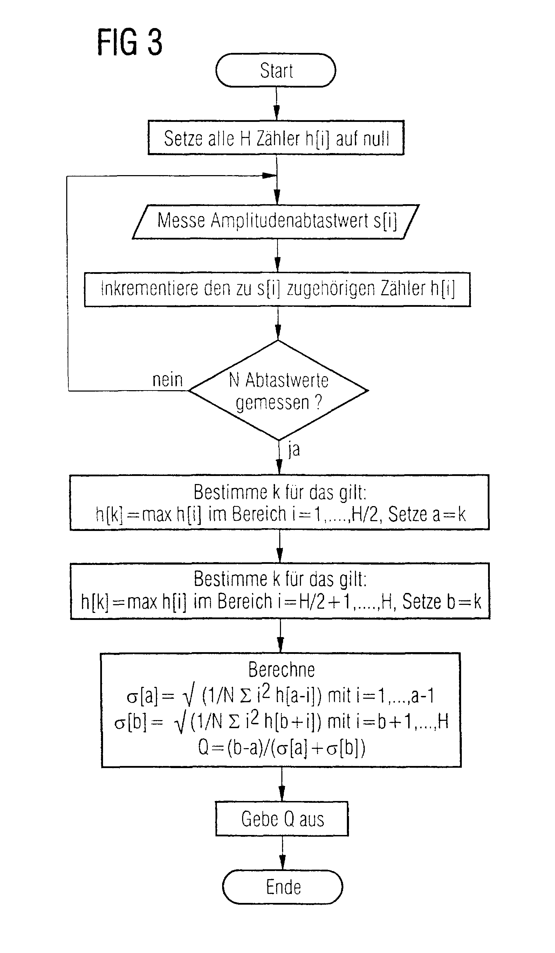

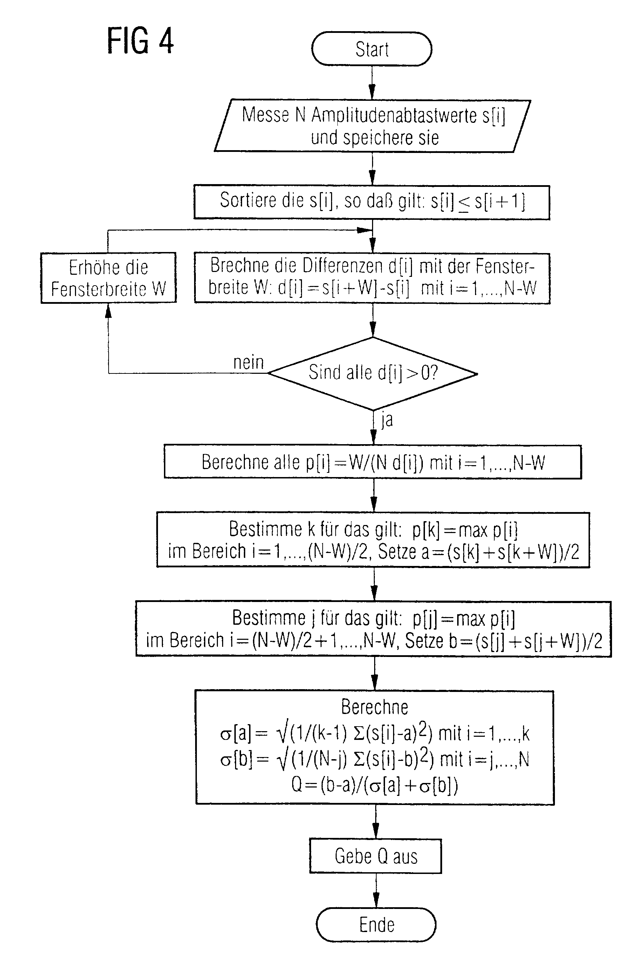

In Fig 3 und Fig. 4 ist jeweils ein Ausführungsbeispiel in Form eines Flußdiagramms zu sehen. Zur dort verwendeten Notation ist anzumerken, daß Variablen in eckigen Klammern als Indizes zu verstehen sind, d.h. es gilt

$$x_i \equiv x[i]$$

Das Ausführungsbeispiel in Fig. 3 basiert auf der Aufstellung eines Histogramms und dessen anschließender Auswertung im Sinne des oben beschriebenen Verfahrens. Es eignet sich insbesondere dann, wenn ein A/D-Wandler mit kleiner Auflösung (8 bit) verwendet wird und der Stichprobenumfang N sehr groß ist (Beispiel N > 10000).

Für Anordnungen zur Stichprobenentnahme, die mit A/D-Wandlern hoher Auflösung (> 12 bit) arbeiten, und bei moderatem Stichprobenumfang, wird die Histogrammethode zu ungenau. In diesem Fall ist das Ausführungsbeispiel aus Fig. 4 besser geeignet. Es verzichtet auf die Aufstellung eines Histogramms und sucht die beiden lokalen Maxima a und b über eine Schätzung von ps(s). Die Schätzung kann beispielsweise durch die aus Numerical recipes in Pascal, Numerical analysis, Applications of computer systems by Press William H., Seiten 507..509 bekannten Methode der Schätzung der Rate von einem inhomogenen Poisson process durch J-te Wartezeiten gegeben sein.

## Patentansprüche

1. Verfahren zur Überwachung der Signalqualität in einer transparenten optischen Übertragungsstecke, demzufolge

   - das Signal asynchron zur Entnahme von Amplitudenstichproben abgetastet wird
   - die Lage der lokalen Maxima (a, b) in der Wahrscheinlichkeitsdichtefunktion (ps(s)) der Amplitudenstichproben für den mit a bezeichneten niedrigen logischen Zustand 0 und den mit b bezeichneten hohen logischen Zustand 1 ermittelt werden
   - aus der Verteilung ein Signalqualitätsparameter Q ermittelt wird,

   **dadurch gekennzeichnet,**
   **daß** für mindestens ein Maximum (a, b) die Standardabweichung (sa, sb) nur aus Werten der Wahrscheinlichkeitsdichtefunktion ermittelt wird, die zu der Flanke des eigenen Maximums (a bzw. b) gehören, die dem jeweils anderen Maximum (b bzw. a) abgewandt ist.

2. Verfahren nach Anspruch 1,
   **dadurch gekennzeichnet,**
   **daß** für beide Maxima (a, b) die Verteilungen nur für die Flanken, die von den jeweiligen eigenen Maxima (a, b) bezüglich des jeweils anderen Maximus (b, a) abgewandt sind, ermittelt werden.

3. Verfahren nach einem der vorstehenden Ansprüche,
   **dadurch gekennzeichnet,**
   **daß** das Signal mit einer gegenüber der Bitfolgerate des Signals erheblich niedrigeren Rate abgetastet wird.

4. Verfahren nach einem der vorstehenden Ansprüche,
   **dadurch gekennzeichnet,**
   **daß** das Aufsuchen eines Maximums (a, b) über eine Schätzung, insbesondere eine Schätzung nach der ansich bekannten Methode "Schätzung der Rate von einem inhomogenen Poisson-Prozeß durch J-te Wartezeiten" erfolgt.

## Claims

1. Method for monitoring the signal quality in a transparent optical transmission path, in which

   - the signal is sampled asynchronously in order to take amplitude samples,
   - the positions of the local maxima (a, b) in the probability density function (ps(s)) of the amplitude samples for the low logic state 0 denoted by a and for the high logic state 1 denoted by b are determined,
   - a signal quality parameter Q is determined from the distribution,

   **characterized in that**, for at least one maximum (a, b), the standard deviation (sa,sb) is determined only from values of the probability density function which are associated with that flank of the associated maximum (a or b) which faces away from the respective other maximum (b or a).

2. Method according to Claim 1,
   **characterized in that**, for both maxima (a, b), the distributions are determined only for those flanks which face away from the respective one maxima (a, b) with respect to the respective other maximum (b, a).

3. Method according to one of the preceding claims,
   **characterized in that** the signal is sampled at a considerably lower rate than the bit repetition rate of the signal.

**4.** Method according to one of the preceding claims, **characterized in that** the search for a maximum (a, b) is carried out via an estimate, in particular an estimate based on the method known per se of "estimation of the rate from an inhomogeneous Poisson process by means of J-tn waiting times".

**Revendications**

**1.** Procédé de surveillance de la qualité des signaux dans un parcours de transmission optique transparent, dans lequel :

- le signal est échantillonné de manière asynchrone pour prélever des échantillons d'amplitude,
- la position des maxima locaux (a, b) dans la fonction de densité de probabilité (ps(s)) des échantillons d'amplitude est déterminée pour l'état logique bas 0 désigné par a et l'état logique haut 1 désigné par b,
- un paramètre de qualité du signal Q est déterminé à partir de la distribution,

  **caractérisé en ce que** pour au moins un maximum (a, b), l'écart - type (sa, sb) n'est déterminé qu'à partir de valeurs de la fonction de densité des probabilités qui appartiennent au flanc du maximum propre (a ou b) qui n'est pas tourné vers l'autre maximum (b ou a).

**2.** Procédé selon la revendication 1, **caractérisé en ce que** pour les deux maxima (a, b), les distributions ne sont déterminées que pour les flancs qui ne sont pas tournés vers les maxima propres (a, b) respectifs par rapport à l'autre maximum (b, a) respectif.

**3.** Procédé selon l'une des revendications précédentes, **caractérisé en ce que** le signal est échantillonné à un taux considérablement plus bas que le taux de succession des bits du signal.

**4.** Procédé selon l'une des revendications précédentes, **caractérisé en ce que** la recherche d'un maximum (a, b) s'effectue par une estimation, en particulier une estimation selon la méthode connue en soi "d'estimation des taux d'un processus de Poisson inhomogène par les J-èmes temps d'attente".

# FIG 1

# FIG 2

## FIG 3

```
                    ┌──────────────┐
                    │    Start     │
                    └──────────────┘
                           │
                           ▼
          ┌────────────────────────────────────┐
          │  Setze alle H Zähler h[i] auf null  │
          └────────────────────────────────────┘
                           │
                           ▼
          ╱──────────────────────────────────╱
          ╱   Messe Amplitudenabtastwert s[i] ╱
         ╱──────────────────────────────────╱
                           │
                           ▼
     ┌─────────────────────────────────────────────┐
     │ Inkrementiere den zu s[i] zugehörigen Zähler h[i] │
     └─────────────────────────────────────────────┘
                           │
                           ▼
                       ╱───────╲
             nein     ╱ N Abtastwerte ╲
          ◄──────────╲  gemessen ?   ╱
                      ╲───────╱
                          │ ja
                          ▼
```

Bestimme k für das gilt:
$h[k] = \max h[i]$ im Bereich $i = 1, \ldots, H/2$, Setze $a = k$

Bestimme k für das gilt:
$h[k] = \max h[i]$ im Bereich $i = H/2+1, \ldots, H$, Setze $b = k$

Berechne
$\sigma[a] = \sqrt{(1/N \sum i^2 h[a-i])}$ mit $i = 1, \ldots, a-1$
$\sigma[b] = \sqrt{(1/N \sum i^2 h[b+i])}$ mit $i = b+1, \ldots, H$
$Q = (b-a)/(\sigma[a] + \sigma[b])$

Gebe Q aus

Ende

# FIG 4

Start

Messe N Amplitudenabtastwerte s[i] und speichere sie

Sortiere die s[i], so daß gilt: $s[i] \leq s[i+1]$

Erhöhe die Fensterbreite W

Brechne die Differenzen d[i] mit der Fensterbreite W: $d[i] = s[i+W] - s[i]$ mit $i = 1,...,N-W$

Sind alle $d[i] > 0$?

nein

ja

Berechne alle $p[i] = W/(N \, d[i])$ mit $i = 1,...,N-W$

Bestimme k für das gilt: $p[k] = \max p[i]$ im Bereich $i = 1,...,(N-W)/2$, Setze $a = (s[k] + s[k+W])/2$

Bestimme j für das gilt: $p[j] = \max p[i]$ im Bereich $i = (N-W)/2 + 1,...,N-W$, Setze $b = (s[j] + s[j+W])/2$

Berechne
$\sigma[a] = \sqrt{(1/(k-1) \, \Sigma(s[i]-a)^2)}$ mit $i = 1,...,k$
$\sigma[b] = \sqrt{(1/(N-j) \, \Sigma(s[i]-b)^2)}$ mit $i = j,...,N$
$Q = (b-a)/(\sigma[a] + \sigma[b])$

Gebe Q aus

Ende